# FASCICULE DE BREVET EUROPEEN

(11) **EP 2 534 741 B1**
(45) Date de publication et mention de la délivrance du brevet: **03.08.2016**
(21) Numéro de dépôt: 11708904.5
(22) Date de dépôt: 07.02.2011
(51) Int. Cl.: H02G 3/04, F16L 3/26

(54) **CHEMIN DE CÂBLES EN FILS**
GITTERKANAL FÜR KABEL
CABLE TROUGH MADE OF WIRES

(30) Priorité: 08.02.2010 FR 1000501
(43) Date de publication de la demande: 19.12.2012
(73) Titulaire: I.C.M. Group, 21500 Montbard (FR)
(72) Inventeur: BELLANGER, Jérôme, F-72650 Saint Saturnin (FR); DECORE, Raphaël, F-72140 Sille Le Guillaume (FR); ADAM, Damien, F-72240 Domfront en Champagne (FR); WARIN, Ludovic, F-60320 Bethisy-Saint-Pierre (FR)
(74) Mandataire: Santarelli
(86) Numéro de dépôt international: PCT/FR2011/000074
(87) Numéro de publication internationale: WO 2011/095714

(56) Documents cités:
- EP-A1- 0 298 825
- EP-A1- 0 818 862
- JP-A- 7 184 309
- US-A1- 2002 030 143

## Description

La présente invention concerne des tronçons de chemin de câbles en fils.

Des tronçons de chemin de câbles du type de ceux de l'invention sont par exemple connus par le document EP-0 298 825 ou bien encore le document FR-2 751 723, le document US-2002030143 et le document JP-7184309. Un tronçon tel que décrit dans ces documents sert à la réalisation d'un chemin de câbles utilisé principalement pour assurer le soutien, le logement et la protection d'éléments longilignes tels des câbles électriques mais également des fibres optiques ou bien encore des tubes, par exemple, des tubes de liaison pneumatique ou hydraulique.

Le document EP 0 818 062 divulgue un tronçon selon le preambule de la revendication 1.

Un tronçon de chemin de câbles en fils présente généralement une forme allongée et une section en U. Il comporte des fils longitudinaux, appelés aussi fils de chaîne, disposés parallèlement les uns par rapport aux autres ainsi que des fils transversaux, appelés aussi fils de trame, et disposés dans un plan transversal à la direction longitudinale des fils de chaîne. Les fils de chaîne sont généralement sensiblement rectilignes tandis que les fils de trame présentent une forme en U. Les fils de trame sont soudés aux fils de chaîne formant ainsi un maillage. Le chemin de câbles ainsi formé présente un fond destiné à servir de support aux câbles, ou similaires et les parois latérales, appelées aussi ailes, sont destinées à maintenir les câbles ou similaires sur le fond du chemin de câbles.

Les chemins de câbles réalisés avec de tels tronçons de chemin de câbles présentent l'avantage de présenter une masse réduite, d'être d'un prix de revient concurrentiel et permettent une bonne aération, et donc un bon refroidissement, des câbles supportés.

Toutefois, après fabrication et avant montage, lors du stockage et du transport, les tronçons de chemin de câbles occupent un volume important.

La présente invention a alors pour but de fournir des tronçons de chemin de câbles qui, tout en conservant les avantages des tronçons de chemin de câbles en fils de l'art antérieur, permettent de gagner du volume lors du stockage et du transport. Avantageusement, les tronçons de chemin de câbles pourront s'emboîter les uns dans les autres sans entraîner de déformation desdits tronçons de chemin de câbles, ni même seulement de certains de ces tronçons de chemin de câbles.

À cet effet, la présente invention propose un tronçon de chemin de câbles en fils comportant d'une part des fils s'étendant selon une direction dite longitudinale, appelés fils de chaîne, disposés parallèlement les uns par rapport aux autres et d'autre part des fils transversaux, appelés fils de trame, disposés dans un plan transversal à ladite direction longitudinale et solidarisés à ceux-ci en formant un treillis, ledit tronçon de chemin de câbles présentant un fond disposé entre deux parois latérales, chaque fil de trame comportant une partie centrale rectiligne disposée entre deux parties latérales rectilignes, et chaque partie latérale rectiligne d'un fil de trame étant reliée à la partie centrale rectiligne correspondante par une partie de liaison.

Selon la présente invention, au moins une partie de liaison d'un fil de trame est une partie courbe, avec les fils de trame qui ont à l'extérieur un côté convexe; cette partie courbe porte un fil de chaîne qui est situé entièrement entre les plans définis par les faces intérieures des parois latérales ; la partie centrale rectiligne et les parties de liaison des fils de trame définissent avec les fils de chaîne qui y sont solidarisés le fond du tronçon de chemin de câbles, et les fils de chaîne au niveau du fond du tronçon de chemin de câbles sont solidarisés aux fils de trame de telle sorte que les fils de chaîne se trouvent du côté convexe des fils de trame.

Un tel tronçon de chemin de câbles peut venir s'emboîter avec un tronçon similaire de façon compacte. Alors que lors de l'empilage de tronçons de chemin de câbles de l'art antérieur le tronçon supérieur venait reposer sur les fils de rive du tronçon inférieur, ici le contact peut être réalisé au fond du tronçon de chemin de câbles, ce qui permet un gain sensible de place lors d'un empilage. On arrive ainsi à obtenir un empilage plus dense.

Dans une forme de réalisation, la forme de la partie de liaison est choisie parmi les arcs de cercle et lesarcs d'ellipse.

Selon une première forme de réalisation, dans un tronçon de chemin de câbles selon l'invention, on peut prévoir que chaque partie de liaison courbe ne présente aucun point d'inflexion. Dans un tronçon de chemin de câbles selon l'invention au moins une partie de liaison, ou bien chaque partie de liaison, présente par exemple un rayon de courbure compris entre 10 et 25 mm.

Pour avoir un tronçon de chemin de câbles symétrique, chaque partie rectiligne d'une partie de liaison des fils de trame peut être solidarisée à un fil de chaîne.

Pour protéger les câbles, ou similaires, lors de leur introduction dans un tronçon de chemin de câbles selon la présente invention, on peut avantageusement prévoir qu'un fil de chaîne, appelé fil de rive, est solidarisé à chaque fois à une extrémité libre des fils de trame, ledit fil de rive étant replié de telle sorte qu'il soit solidarisé à chaque extrémité de fil de trame en bout dudit fil de trame et qu'entre deux fils de trame le fil de rive fait saillie latéralement vers l'extérieur au-delà du fil de trame.

Dans un tronçon de chemin de câbles selon la présente invention, la partie centrale rectiligne de chaque fil de trame est de préférence perpendiculaire à la partie latérale rectiligne dudit fil de trame. Cette caractéristique permet tout à la fois d'empiler deux tronçons de chemin de câbles de manière compacte et d'offrir une bonne résistance mécanique du tronçon considéré.

Dans une variante de réalisation, lorsqu'il n'est pas nécessaire de renforcer les parois latérales du tronçon de chemin de câbles, on prévoit par exemple que les parties latérales rectilignes des fils de trame portent uniquement un fil longitudinal solidarisé à l'extrémité libre de chaque fil de trame, c'est-à-dire le fil de rive correspondant.

Un tronçon de chemin de câbles selon l'invention est avantageusement réalisé en acier, et ses fils de chaîne sont solidarisés aux fils de trame par exemple par soudage. Ceci permet la réalisation d'un tronçon de chemin de câbles à un prix de revient concurrentiel tout en apportant de bonnes propriétés mécaniques.

Enfin la présente invention concerne également un ensemble de tronçons de chemin de câbles empilés les uns dans les autres dans lequel chaque tronçon est un tronçon tel que décrit ci-dessus. Avantageusement, un tel ensemble est caractérisé en ce que la partie centrale rectiligne et les parties de liaison des fils de trame définissent avec les fils de chaîne qui y sont solidarisés le fond du tronçon de chemin de câbles, et en ce que deux tronçons de chemin de câbles voisins sont emboîtés l'un au-dessus de l'autre de telle sorte qu'au moins un fil de chaîne solidarisé au fond d'un tronçon de chemin de câbles vient au contact du fond de l'autre tronçon de chemin de câbles. Un tel ensemble est remarquable notamment par sa compacité.

Des détails et avantages de la présente invention ressortiront mieux de la description qui suit, faite en référence aux dessins schématiques annexés sur lesquels :
La figure 1 est une vue en coupe transversale d'un premier tronçon de chemin de câbles selon la présente invention,
La figure 2 montre en perspective le tronçon de chemin de câbles de la figure 1,
La figure 3 est une vue en coupe transversale de deux tronçons de chemin de câbles de la figure 1 emboîtés l'un dans l'autre,
La figure 4 montre en perspective les extrémités des deux tronçons de chemin de câbles montrés sur la figure 3, et
Les figures 5 à 7 sont des vues en coupe transversale similaires à la vue de la figure 1 pour des variantes de réalisation d'un tronçon de chemin de câbles selon la présente invention.

On reconnaît sur les différentes figures des tronçons de chemin de câbles en fils. De manière classique, ces tronçons de chemin de câbles comportent d'une part des fils longitudinaux appelés fils de chaîne 2 et d'autre part des fils transversaux appelés fils de trame 4. Ces fils sont des fils d'acier et les fils de chaîne 2 sont reliés aux fils de trame 4 par soudage.

Les différentes formes de réalisation de tronçons de chemin de câbles représentées sur les figures ci-jointes dérivent de tronçons de chemin de câbles construits conformément à l'invention décrite dans le document EP-0 298 825. Toutefois, la présente invention pourrait également s'appliquer à d'autres types de chemin de câbles, tel par exemple, un chemin de câbles montré dans le document FR-2 751 723.

Dans une forme de réalisation préférée, telle que représentée sur les dessins, on trouve ainsi des fils de chaîne 2 rectilignes et des fils de chaîne qui présentent une forme globale rectiligne avec toutefois, régulièrement espacés, des déports latéraux. Il s'agit ici des fils qui seront appelés par la suite fils de rive 2'. Comme expliqué dans le document EP-0 298 825, ces déports latéraux permettent de venir souder les fils de rive 2' en bout des extrémités libres des fils de trame 4.

Alors que les fils de chaîne 2, 2' dans un tronçon de chemin de câbles selon la présente invention peuvent reprendre la forme et les caractéristiques des fils longitudinaux d'un tronçon de chemin de câbles en fils de l'art antérieur, la forme des fils de trame 4 d'un tronçon de chemin de câbles selon la présente invention et la position des fils de chaîne 2, présentent des caractéristiques particulières indiquées ci-après.

Dans les formes de réalisation représentées sur les dessins, on remarque que les fils de trame 4 présentent une forme globale en U (connue déjà de l'art antérieur) permettant de donner au tronçon de chemin de câbles une forme de goulotte.

Dans un tronçon de chemin de câbles selon la présente invention, un fil de trame 4 présente ainsi une base à laquelle sont reliées deux branches latérales. La base présente une partie centrale rectiligne 6 et chaque branche latérale présente une partie latérale rectiligne 8. Chacune des parties latérales rectilignes 8 est reliée à la partie centrale rectiligne 6 par une partie de liaison 12 qui présente une forme courbe par exemple la forme d'un arc de cercle ou d'un arc d'ellipse.

Dans la suite de la description, on supposera que la partie centrale rectiligne 6 est horizontale tandis que les parties latérales rectilignes 8 sont verticales. On a donc ici des parties latérales rectilignes qui s'étendent perpendiculairement à la partie centrale rectiligne 6. Les parties de liaison 12 sont alors par exemple des quarts de cercle ou des quarts d'ellipse. Le rayon de courbure de ces parties de liaison est par exemple compris entre 10 et 25 mm. Il ne s'agit pas ici d'un rayon de courbure que l'on obtient fatalement lors du pliage d'un fil métallique. On pourrait prévoir ici d'avoir non pas un angle droit mais un angle ouvert, de préférence seulement légèrement ouvert afin de bien assurer la fonction de maintien de câbles, ou similaires dans le tronçon de chemin de câbles.

On considérera par la suite que le fond du tronçon du chemin de câbles est formé par, d'une part, la partie centrale rectiligne 6 et, d'autre part, les parties de liaison 12. Le fond correspond ainsi à la partie du tronçon du chemin de câbles destinée à venir porter les câbles contenus dans ledit tronçon. Les fils de chaîne 2 sont soudés sur les fils de trame 4 de telle sorte que deux tronçons de chemin de câbles similaires soient emboîtables l'un dans l'autre. De préférence au moins un fil de chaîne 2 solidaire du fond d'un tronçon de chemin de câbles peut venir au contact du fond de l'autre tronçon de chemin de câbles.

Dans toutes les formes de réalisation représentée, les fils de chaîne 2 rectilignes sont soudés à l'extérieur des fils de trame 4 (on ne tient pas compte ici des fils de rive 2', qui sont soudés en bout des fils de trame 4). Les fils de chaîne 2 sont ainsi soudés sur la face convexe des fils de trame.

Habituellement, on a dans un tronçon de chemin de câbles au moins deux fils de rive 2' et un fil de chaîne 2 soudé au niveau du fond du tronçon du chemin de câbles. Ceci est vrai pour toutes les formes de réalisation d'un chemin de câbles selon l'invention représentées sur les dessins ci-joints.

On peut remarquer sur les figures jointes à la présente description que les parois latérales du tronçon de chemin de câbles portent uniquement les fils de rive 2'. On ne trouve pas d'autre fil de chaîne soudé au niveau des parties latérales rectilignes 8 des fils de trame 4.

On remarque également que la forme des fils de trame 4 ne présente aucun point d'inflexion (un plan tangent suivant le fil n'est jamais traversé par le fil de trame 4 au point de tangence).

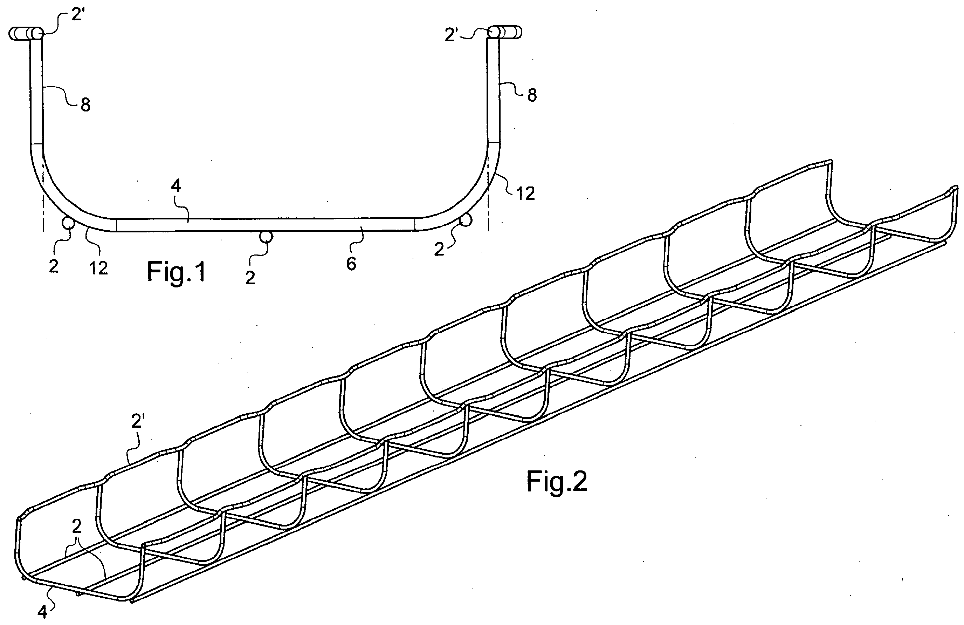

Les fils de chaîne 2 soudés au fond du tronçon de chemin de câbles sont disposés de telle sorte qu'ils se trouvent entièrement à l'intérieur des parois latérales du tronçon de chemin de câbles. Ainsi, si l'on prolongeait virtuellement les parties latérales rectilignes 8 (cf. les lignes en traits mixtes de la figure 1) à l'intérieur du chemin de câbles, les fils de chaîne 2 reliés au fond du tronçon de chemin de câbles se trouveraient entièrement entre ces parties rectilignes prolongées virtuellement. De la sorte, les fils de chaîne 2 ne gênent pas lorsque l'on vient emboîter un tronçon de chemin de câbles dans un tronçon de chemin de câbles similaire.

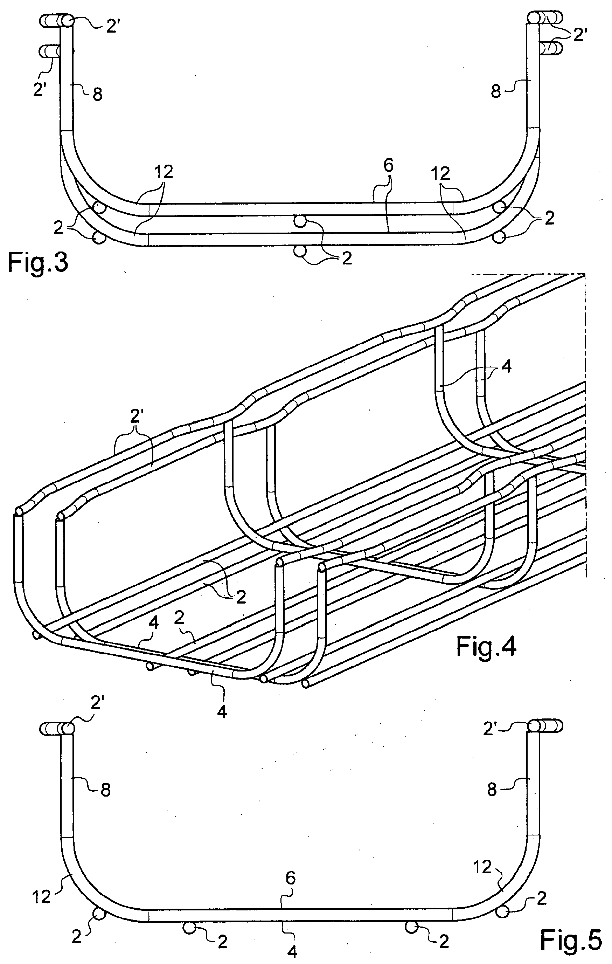

Les figures 3 et 4 illustrent à titre d'exemple comment deux tronçons de chemin de câbles tels ceux représentés sur les figures 1 et 2 peuvent s'emboîter. Dans cette forme de réalisation qui comporte des fils de chaîne 2 disposés au niveau des parties de liaison 12, on remarque que ce sont ces derniers fils de chaîne 2 du tronçon de chemin de câbles supérieur qui viennent au contact du fond du tronçon de chemin de câbles inférieur, et plus précisément ces fils de chaîne 2 viennent au contact des parties de liaison 12 des fils de trame 4 du tronçon de chemin de câbles inférieur.

On peut remarquer, notamment sur la figure 3, qu'il serait possible d'avoir un fil de chaîne disposé sur la paroi latérale du tronçon de chemin de câbles à l'extérieur du fil de trame 4. Toutefois, on remarque également que ce fil de chaîne devrait être disposé à proximité immédiate du fil de rive 2'. Ainsi, sauf cas particulier, il n'est pas prévu de disposer sur la paroi latérale du tronçon de chemin de câbles un fil longitudinal autre que le fil de rive.

Les figures 5 à 7 montrent des variantes de réalisation d'un tronçon de chemin de câbles selon la présente invention.

Sur la figure 5, on a une forme de réalisation très proche de celle des figures 1 à 4. Toutefois, comme on peut le remarquer, au lieu de n'avoir qu'un seul fil de-chaîne fixé à la partie centrale rectiligne 6 du fond du tronçon de chemin de câbles, on a ici deux fils de chaîne 2 soudés sous cette partie centrale rectiligne 6. Comme c'est généralement le cas pour les tronçons de chemin de câbles, on a dans cette forme de réalisation, comme dans toutes les formes de réalisation représentées sur les dessins, un plan de symétrie. Ainsi, dans la forme de réalisation de la figure 5, la partie centrale du tronçon de chemin de câbles n'est pas occupée par un fil longitudinal. De la sorte, une telle forme de réalisation est avantageusement utilisée lorsque le tronçon de chemin de câbles est monté suspendu à des tiges filetées s'étendant verticalement en position centrale par rapport au chemin de câbles.

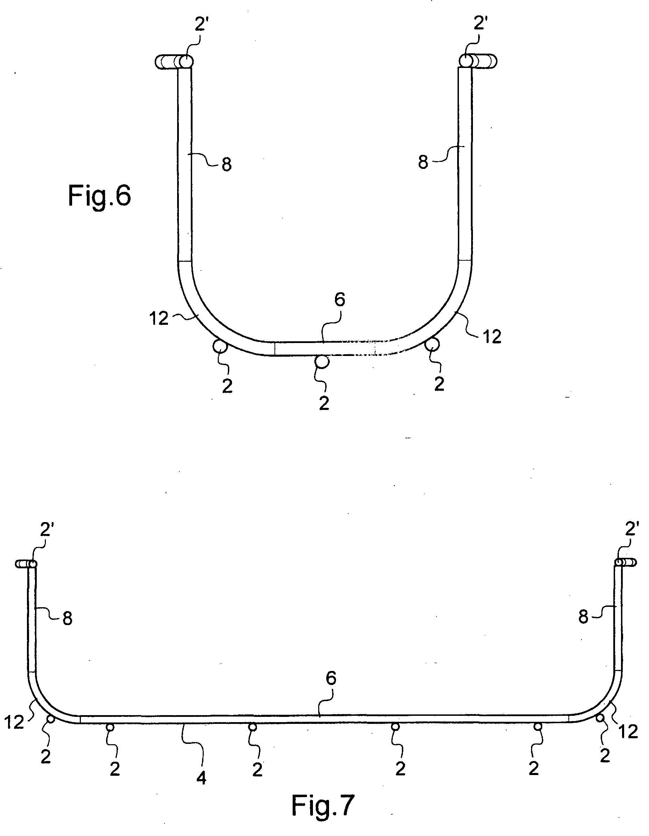

Les figures 6 et 7 représentent des tronçons de chemin de câbles avec des parois latérales relativement hautes. Dans de telles formes de réalisation, la présence d'un fil de chaîne 2 fixé au niveau de chaque partie de liaison 12 permet de conférer au tronçon de chemin de câbles une bonne rigidité malgré l'absence de fils de chaîne au niveau de la paroi latérale. Les autres fils de chaîne 2 (hormis les fils de rive 2') sont quant à eux répartis en étant fixés à la partie centrale rectiligne 6 du tronçon de chemin de câbles. Dans la forme de réalisation de la figure 6, on a un seul fil de chaîne 2 soudé sur la partie centrale rectiligne 6 des fils de trame 4 tandis que dans la forme de réalisation de la figure 7, quatre fils de chaîne 2 sont soudés à la partie centrale rectiligne 6 du tronçon de chemin de câbles.

Les formes de réalisation montrées sur les diverses figures mettent en oeuvre des fils de trame qui comportent uniquement deux parties latérales rectilignes entre lesquelles se trouvent une partie centrale rectiligne et une partie de liaison courbe reliant à chaque fois une partie latérale rectiligne à la partie centrale rectiligne. Les parties de liaison courbes ne présentent pas de point d'inflexion et on ne retrouve pas de point d'inflexion au niveau des fils de trame représentés. Au-delà des parties latérales rectilignes, du côté des fils de rive, le fil de trame pourrait changer de forme sans pour autant sortir du cadre de la présente invention (et même éventuellement présenter dans cette zone à proximité d'un fil de rive un point d'inflexion). Il apparaîtra toutefois à l'homme du métier qu'au-delà de la partie latérale rectiligne, le fil de trame restera de préférence en dehors de la paroi latérale (illustrée sur la figure 1 par des traits mixtes qui s'étendent en prolongement de la face intérieure des parties latérales rectilignes du tronçon de chemin de câbles) pour conserver les bénéfices de l'invention.

Les diverses formes de réalisation décrites ci-dessus reprennent donc une structure de treillis qui peut sembler être tout à fait classique de prime abord mais qui présente l'énorme avantage de permettre un emboîtement compact de tronçons de chemin de câbles. Alors qu'avec des tronçons de chemin de câbles de l'art antérieur, lors d'un emboîtement, le tronçon de chemin de câbles supérieur vient en appui sur les fils de rive du tronçon de chemin de câbles inférieur, la présente invention permet que le tronçon de chemin de câbles supérieur vienne en appui sur le fond du tronçon de chemin de câbles inférieur, soit au niveau de la partie plane rectiligne du fond du tronçon de chemin de câbles inférieur, soit au niveau de la partie de liaison du tronçon de chemin de câbles inférieur.

Les essais réalisés ont montré que lorsque des tronçons de chemin de câbles étaient empilés par emboîtement conformément à la présente invention, il n'y avait pas plus de risques de déformation des tronçons de chemin de câbles lors du transport et du stockage qu'avec des tronçons de chemin de câbles de l'art antérieur. En outre, si l'on considère un tronçon de chemin de câbles, on remarque que pour des dimensions données, on retrouve une résistance mécanique similaire à celle d'un tronçon de chemin de câbles de l'art antérieur.

Bien entendu, comme il apparaîtra à l'homme du métier, on retrouve pour un tronçon de chemin de câbles selon l'invention toutes les qualités d'un tronçon de chemin de câbles de l'art antérieur en ce qui concerne notamment son poids, sa facilité de fabrication et l'aération des câbles supportés dans le chemin de câbles correspondant.

La présente invention ne se limite pas aux formes de réalisation préférées décrites ci-dessus à titre d'exemple non limitatifs, ni aux variantes évoquées plus haut. Elle concerne également toutes les variantes de réalisation à la portée de l'homme du métier dans le cadre des revendications ci-après.

## Revendications

1. Tronçon de chemin de câbles en fils comportant d'une part des fils s'étendant selon une direction dite longitudinale, appelés fils de chaîne (2, 2'), disposés parallèlement les uns par rapport aux autres et d'autre part des fils transversaux, appelés fils de trame (4), disposés dans un plan transversal à ladite direction longitudinale et solidarisés à ceux-ci en formant un treillis, ledit tronçon de chemin de câbles présentant un fond disposé entre deux parois latérales, chaque fil de trame (4) comportant une partie centrale rectiligne (6) disposée entre deux parties latérales rectilignes (8), et chaque partie latérale rectiligne (8) d'un fil de trame (4) étant reliée à la partie centrale rectiligne (6) correspondante par une partie de liaison (12),
**caractérisé en ce qu'**au moins une partie de liaison (12) d'un fil de trame (4) est une partie courbe, avec les fils de trame (4) qui ont à l'extérieur un côté convexe,
**en ce que** cette partie courbe porte un fil de chaîne (2) qui est situé entièrement entre les plans définis par les faces intérieures des parois latérales,
**en ce que** la partie centrale rectiligne (6) et les parties de liaison (12) des fils de trame définissent avec les fils de chaîne (2) qui y sont solidarisés le fond du tronçon de chemin de câbles, et
**en ce que** les fils de chaîne (2) au niveau du fond du tronçon de chemin de câbles sont solidarisés aux fils de trame (4) de telle sorte que les fils de chaîne (2) se trouvent du côté convexe des fils de trame (4).

2. Tronçon de chemin de câbles selon la revendication 1, **caractérisé en ce que** la forme de la partie de liaison est choisie parmi les arcs de cercle et les arcs d'ellipse.

3. Tronçon de chemin de câbles selon l'une des revendications 1 ou 2, **caractérisé en ce que** chaque partie de liaison (12) courbe ne présente aucun point d'inflexion.

4. Tronçon de chemin de câbles selon l'une des revendications 1 à 3, **caractérisé en ce qu'**au moins une partie de liaison (12) présente un rayon de courbure compris entre 10 et 25 mm.

5. Tronçon de chemin de câbles selon la revendication 4, **caractérisé en ce que** chaque partie de liaison (12) présente un rayon de courbure compris entre 10 et 25 mm.

6. Tronçon de chemin de câbles selon l'une des revendications 1 à 5, **caractérisé en ce que** chaque partie de liaison (12) des fils de trame (4) est solidarisée à un fil de chaîne (2).

7. Tronçon de chemin de câbles selon l'une des revendications 1 à 6, **caractérisé en ce qu'**un fil de chaîne, appelé fil de rive (2'), est solidarisé à chaque fois à une extrémité libre des fils de trame (4), ledit fil de rive (2') étant replié de telle sorte qu'il soit solidarisé à chaque extrémité de fil de trame (4) en bout dudit fil de trame (4) et qu'entre deux fils de trame (4) lè fil de rive (2') fait saillie latéralement vers l'extérieur au-delà du fil de trame (4).

8. Tronçon de chemin de câbles selon l'une des revendications 1 à 7, **caractérisé en ce que** la partie centrale rectiligne (6) de chaque fil de trame (4) est perpendiculaire à la partie latérale rectiligne (8) dudit fil de trame (4).

9. Tronçon de chemin de câbles selon l'une des revendications 1 à 8, **caractérisé en ce que** les parties latérales rectilignes (8) des fils de trame (4) portent uniquement un fil longitudinal (2') solidarisé à l'extrémité libre de chaque fil de trame (4).

10. Tronçon de chemin de câbles selon l'une des revendications 1 à 9, **caractérisé en ce qu'**il est réalisé en acier, et **en ce que** les fils de chaîne (2, 2') sont solidarisés aux fils de trame (4) par soudage.

11. Ensemble de tronçons de chemin de câbles empilés les uns dans les autres, **caractérisé en ce que** chaque tronçon est un tronçon selon l'une des revendications 1 à 10.

12. Ensemble de tronçons de chemin de câbles selon la revendication 11, **caractérisé en ce que** la partie centrale rectiligne (6) et les parties de liaison des fils de trame définissent avec les fils de chaîne (2) qui y sont solidarisés le fond du tronçon de chemin de câbles, et **en ce que** deux tronçons de chemin de câbles voisins sont emboîtés l'un dans l'autre de telle sorte qu'au moins un fil de chaîne (2) solidarisé au fond d'un tronçon de chemin de câbles vient au contact du fond de l'autre tronçon de chemin de câbles.

## Patentansprüche

1. Gitterkabelkanalteilstück, das einerseits in einer Längsrichtung verlaufende, parallel zueinander angeordnete Drähte, sogenannte Kettdrähte (2, 2'), und andererseits in einer zur Längsrichtung quer verlaufenden Ebene angeordnete Querdrähte, sogenannte Schussdrähte (4) umfasst, die an diesen befestigt sind und dabei ein Gitter bilden, wobei das Kabelkanalteilstück einen zwischen zwei Seitenwänden angeordneten Boden aufweist, wobei jeder Schussdraht (4) ein zwischen zwei geraden Seitenteilen (8) angeordnetes, gerades Mittelteil (6) umfasst, und wobei jedes gerade Seitenteil (8) eines Schussdrahts (4) mit dem entsprechenden geraden Mittelteil (6) durch ein Verbindungsteil (12) verbunden ist,
**dadurch gekennzeichnet, dass** wenigstens ein Verbindungsteil (12) eines Schussdrahts (4) ein gekrümmtes Teil ist, wobei die Schussdrähte (4) außen eine konvexe Seite haben,
dass dieses gekrümmte Teil einen Kettdraht (2) trägt, der vollständig zwischen den von den Innenseiten der Seitenwände gebildeten Ebenen liegt,
dass das gerade Mittelteil (6) und die Verbindungsteile (12) der Schussdrähte mit den daran befestigten Kettdrähten (2) den Boden des Kabelkanalteilstücks bilden, und
dass die Kettdrähte (2) in Höhe des Bodens des Kabelkanalteilstücks derart an den Schussdrähten (4) befestigt sind, dass die Kettdrähte (2) sich auf der konvexen Seite der Schussdrähte (4) befinden.

2. Kabelkanalteilstück nach Anspruch 1,
**dadurch gekennzeichnet, dass** die Form des Verbindungsteils aus Kreisbögen und Ellipsenbögen gewählt ist.

3. Kabelkanalteilstück nach einem der Ansprüche 1 oder 2,
**dadurch gekennzeichnet, dass** kein gekrümmtes Verbindungsteil (12) einen Wendepunkt aufweist.

4. Kabelkanalteilstück nach einem der Ansprüche 1 bis 3,
**dadurch gekennzeichnet, dass** wenigstens ein Verbindungsteil (12) einen Krümmungsradius zwischen 10 und 25 mm aufweist.

5. Kabelkanalteilstück nach Anspruch 4,
**dadurch gekennzeichnet, dass** jedes Verbindungsteil (12) einen Krümmungsradius zwischen 10 und 25 mm aufweist.

6. Kabelkanalteilstück nach einem der Ansprüche 1 bis 5,
**dadurch gekennzeichnet, dass** jedes Verbindungsteil (12) der Schussdrähte (4) an einem Kettdraht (2) befestigt ist.

7. Kabelkanalteilstück nach einem der Ansprüche 1 bis 6,
**dadurch gekennzeichnet, dass** ein als Randdraht (2') bezeichneter Kettdraht jeweils an einem freien Ende der Schussdrähte (4) befestigt ist, wobei der Randdraht (2') derart umgebogen ist, dass er an jedem Ende des Schussdrahts (4) stumpf am Schussdraht (4) befestigt ist und zwischen zwei Schussdrähten (4) der Randdraht (2') seitlich nach außen über den Schussdraht (4) hinaus vorsteht.

8. Kabelkanalteilstück nach einem der Ansprüche 1 bis 7,
**dadurch gekennzeichnet, dass** das gerade Mittelteil (6) eines jeden Schussdrahts (4) lotrecht zu dem geraden Seitenteil (8) des Schussdrahts (4) ist.

9. Kabelkanalteilstück nach einem der Ansprüche 1 bis 8,
**dadurch gekennzeichnet, dass** die geraden Seitenteile (8) der Schussdrähte (4) nur einen Längsdraht (2') tragen, der an dem freien Ende eines jeden Schussdrahts (4) befestigt ist.

10. Kabelkanalteilstück nach einem der Ansprüche 1 bis 9,
**dadurch gekennzeichnet, dass** er aus Stahl besteht und dass die Kettdrähte (2, 2') durch Schweißen an den Schussdrähten (4) befestigt sind.

11. Anordnung ineinander gestapelter Kabelkanalteilstücke,
**dadurch gekennzeichnet, dass** jedes Teilstück ein Teilstück nach einem der Ansprüche 1 bis 10 ist.

12. Anordnung von Kabelkanalteilstücken nach Anspruch 11,
**dadurch gekennzeichnet, dass** das gerade Mittelteil (6) und die Verbindungsteile der Schussdrähte mit den daran befestigten Kettdrähten (2) den Boden des Kabelkanalteilstücks bilden, und dass zwei benachbarte Kabelkanalteilstücke derart ineinander gesteckt sind, dass wenigstens ein am Boden eines Kabelkanalteilstücks befestigter Kettdraht (2) mit dem Boden des andere Kabelkanalteilstücks in Kontakt gelangt.

## Claims

1. A cable tray section of wire comprising wires extending in a direction designated longitudinal, called warp wires (2, 2'), which are disposed parallel to each other and further comprising transverse wires, called weft wires (4), disposed in a transverse plane to said longitudinal direction and connected to them to form a mesh, said cable tray section having a bottom disposed between two lateral walls, each weft wire (4) comprising a rectilinear central part (6) disposed between two rectilinear lateral parts (8), and each rectilinear lateral part (8) of a weft wire (4) being linked to the corresponding rectilinear central part (6) by a linking part (12),
**characterized in that** at least one linking part (12) of a weft wire (4) is a curved part, the weft wires (4) having a convex side externally,
**in that** this curved part bears a warp wire (2) which is situated entirely between the planes defined by the internal faces of the lateral walls,
**in that** the rectilinear central part (6) and the linking parts (12) of the weft wires define with the warp wires (2) connected thereto the bottom of the cable tray section, and
**in that** the warp wires (2) at the location of the bottom of the cable tray section are connected to the weft wires (4) such that the warp wires (2) are located on the convex side of the weft wires (4).

2. A cable tray section according to claim 1, **characterized in that** the shape of the linking part is chosen from circle arcs and ellipse arcs.

3. A cable tray section according to one of claims 1 or 2, **characterized in that** each curved linking part (12) has no inflection point.

4. A cable tray section according to one of claims 1 to 3, **characterized in that** at least one linking part (12) has a radius of curvature comprised between 10 and 25 mm.

5. A cable tray section according to claim 4, **characterized in that** each linking part (12) has a radius of curvature comprised between 10 and 25 mm.

6. A cable tray section according to one of claims 1 to 5, **characterized in that** each linking part (12) of the weft wires (4) is connected to a warp wire (2).

7. A cable tray section according to one of claims 1 to 6, **characterized in that** a warp wire, called edging wire (2'), is connected in each instance to a free end of the weft wires (4), said edging wire (2') being bent such that it is connected to each end of a weft wire (4) endmost of said weft wire (4) and **in that** between two weft wires (4) the edging wire (2') projects laterally outwards beyond the weft wire (4).

8. A cable tray section according to one of claims 1 to 7, **characterized in that** the rectilinear central part (6) of each weft wire (4) is perpendicular to the rectilinear lateral part (8) of said warp wire (4).

9. A cable tray section according to one of claims 1 to 8, **characterized in that** the rectilinear lateral parts (8) of the weft wires (4) bear only a longitudinal wire (2') connected to the free end of each warp wire (4).

10. A cable tray section according to one of claims 1 to 9, **characterized in that** it is produced from steel, and **in that** the warp wires (2, 2') are connected to the weft wires (4) by welding.

11. A set of cable tray sections stacked inside each other, **characterized in that** each section is a section according to one of claims 1 to 10.

12. A set of cable tray sections according to claim 11, **characterized in that** the rectilinear central part (6) and the linking parts of the weft wires define with the warp wires (2) connected thereto the bottom of the cable tray section, and **in that** two neighboring cable tray sections are nested with one inside the other such that at least one warp wire (2) connected to the bottom of a cable tray section comes into contact with the bottom of the other cable tray section.
